Europäisches Patentamt

**European Patent Office**

**Office européen des brevets**

(19)

(11) **EP 1 015 313 B1**

(12) **EUROPÄISCHE PATENTSCHRIFT**

(45) Veröffentlichungstag und Bekanntmachung des Hinweises auf die Patenterteilung:
**12.03.2003 Patentblatt 2003/11**

(51) Int Cl.⁷: **B64F 1/00**

(21) Anmeldenummer: **98956790.4**

(22) Anmeldetag: **22.09.1998**

(86) Internationale Anmeldenummer:
**PCT/DE98/02822**

(87) Internationale Veröffentlichungsnummer:
**WO 99/015406 (01.04.1999 Gazette 1999/13)**

(54) **DOCKINGSYSTEM FÜR FLUGHAFENTERMINALS**

AIRPORT TERMINAL DOCKING SYSTEM

DISPOSITIF D'ACCOSTAGE POUR AEROGARES

(84) Benannte Vertragsstaaten:
**DE ES FR GB IT NL**

(30) Priorität: **22.09.1997 DE 19741669**

(43) Veröffentlichungstag der Anmeldung:
**05.07.2000 Patentblatt 2000/27**

(73) Patentinhaber: **SIEMENS AKTIENGESELLSCHAFT**
**80333 München (DE)**

(72) Erfinder:
• **BAUMGARTNER, Klaus**
**D-76761 Rülzheim (DE)**
• **BRENNFLECK, Martin**
**D-76307 Karlsbad (DE)**
• **KONERTH, John**
**D-76131 Karlsruhe (DE)**
• **LINK, Norbert**
**D-76187 Karlsruhe (DE)**

(56) Entgegenhaltungen:
WO-A-96/09207         WO-A-96/12265
WO-A-97/14114         DE-A- 4 301 637
DE-C- 19 602 607

**Beschreibung**

Die Erfindung bezieht sich auf ein Dockingsystem für Flughafenterminals, mit einer Positioniervorrichtung als Teil eines Gate-Betriebssystems eines Flughafenterminals, mittels der ein Flugzeug in eine für seinen Bautyp vorgegebene Parkposition leitbar ist und die eine Videoeinrichtung, mittels der das Flugzeug bei seiner Annäherung an das Flughafenterminal erfaßbar ist, und eine Auswerteeinheit aufweist, mittels der ihr von der Videoeinrichtung zugeführte, die Gestalt und die Bewegung des Flugzeugs betreffende Daten auswertbar sind, wobei in der Auswerteeinheit für unterschiedliche Bautypen jeweils ein Template-Satz abgespeichert ist, wobei der Template-Satz zumindest drei, vorzugsweise fünf, für alle Bautypen markante Templates bzw. Umrißabschnitte des betreffenden Bautyps enthält, und daß in der Auswerteeinheit aus den eingegebenen Signalen der Videoeinrichtung die zumindest drei, vorzugsweise fünf, markanten Umrißabschnitte bzw. Templates des sich dem Flughafenterminal nähernden Flugzeugs ermittelbar und mit den abgespeicherten Template-Sätzen vergleichbar sind.

Ein derartiges Dockingsystem wird in der WO 96/09207 beschrieben. Dazu ist eine Positioniervorrichtung vorgesehen, mittels der ein Flugzeug in eine für seinen Bautyp vorgegebene Parkposition leitbar ist und die eine Videoeinrichtung, mittels der das Flugzeug bei seiner Annäherung an das Flughafenterminal erfassbar ist und eine Auswerteeinheit aufweist, mittels der ihr von der Videoeinrichtung zugeführte, die Gestalt und die Bewegung des Flugzeugs betreffende Daten auswertbar sind. Dazu wurde das Windshield der verschiedenen Flugzeugtypen aufgenommen und seine Größe bzw. Lage als Bezugspunkt für das gesamte Flugzeug ausgewertet. Es hat sich jedoch gezeigt, dass eine derartige Auswertung, hauptsächlich verursacht durch Spiegelungsvorgänge und dergleichen, zu einer auf Flughäfen nicht tolerierbaren Fehlerrate bei der Auswertung führt.

Ein ähnliches Dockingsystem ist auch aus der WO 97/14114 bekannt. Bei diesem System werden dreidimensionale Bilder des zu parkenden Flugzeugs aufgenommen, diese Bilder werden mit gedrehten und vergrößerten Templates bzw. Umrissabschnitten verglichen, um die Position des sich nähernden Flugzeugs zu ermitteln.

Aus der DE 40 09 668 A1 ist eine Vorgehensweise bekannt, bei der mittels einer Videokamera ein zweidimensionales Bild erfasst wird, welches in die Auswerteeinheit eingegeben wird.

Der Erfindung liegt die Aufgabe zugrunde, das bekannte Dockingsystem derart weiterzubilden, dass es auch bei widrigen Umgebungs- und Wetterbedingungen mit einer für den Betrieb von Flughäfen ausreichenden äußerst großen Betriebssicherheit einsetzbar ist.

Diese Aufgabe wird bei einem Dockingsystem der eingangs genannten Art erfindungsgemäß dadurch gelöst, daß zur aktuellen Positionsbestimmung des sich dem Flughafenterminal annähernden Flugzeugs ermittelte Trajektorien der Templates bzw. markanter Umrißabschnitte zugrundegelegt werden, indem in der Auswerteeinheit eine Sequenz von Grauwertbildern einlesbar ist, die einzelnen Grauwertbilder der Sequenz räumlich filterbar sind, um Grauwertkanten zu extrahieren, die Sequenz von Grauwertbildern zeitlich filterbar ist, um Bewegungsbilder zu erzeugen, und aus den Bewegungsbildern eine Maske erzeugbar ist, die Bereiche für eine nachfolgende Segmentierung festlegt.

Erfindungsgemäß wird ein Dockingsystem für Flughafenterminals geschaffen, welches einen vergleichsweise geringen Installationsaufwand aufweist und darüber hinaus einen sicheren und weitestgehend automatisierbaren Flughafenterminalbetrieb ermöglicht. Ein genaues Erfassen des Bautyps des sich dem Flughafenterminal nähernden Flugzeugs ist auch dann gesichert, wenn nicht die gesamte Kontur des sich nähernden Flugzeugs mittels der Videoeinrichtung erfaßbar ist, z.B. deshalb, weil sich Hindernisse auf dem Parkfeld bzw. dem Vorfeld des Flughafenterminals befinden.

Als besonders geeignete Videoeinrichtung zur Verwirklichung des erfindungsgemäßen Dockingsystems bzw. dessen Positoniervorrichtung hat sich eine Graubildkamera erwiesen.

Die Objektivbrennwerte der Videoeinrichtung sollten vorteilhafterweise 16 oder 25 mm betragen.

Eine ausreichende Erfassung des sich an das Flughafenterminal annähernden Flugzeugs wird gewährleistet, wenn die Videoeinrichtung etwa fluchtend mit der Mittellinie des Flughaftengates, vorzugsweise in ca. 9 m Höhe, angeordnet ist.

Zur zeitlichen und räumlichen Filterung der Grauwertbilder sollte die Auswerteeinheit zweckmäßigerweise einen Sobel-Filter aufweisen.

Als für die Flugzeugkontur jedes Bautyps besonders markante Umrißabschnitte haben sich zwei Triebwerke, das Windshield und zwei Fahrwerke erwiesen, wobei diese fünf markanten Umrißabschnitte bzw. Template zweckmäßigerweise einen Template-Satz bilden, der für den jeweiligen Flugzeugtyp festgelegt und in der Auswerteeinheit abgespeichert wird.

Zur aktuellen Positionsbestimmung des sich dem Flughafenterminal annähernden Flugzeugs können durch die zeitliche Filterung der Grauwertbilder ermittelte Trajektorien der Templates bzw. markanten Umrißabschnitte der Flugzeugkontur eingesetzt werden.

Bei vollständiger Verwirklichung und Installation des erfindungsgemäßen Dockingsystems, insbesondere von dessen Positioniervorrichtung, ist es möglich, sämtliche beim Andocken des Flugzeugs erforderlichen Arbeitsvorgänge, insbesondere das Andocken der Brücke an das Flugzeug, automatisch ablaufen zu lassen. Hierbei ist es möglich, daß die Videoeinrichtung lediglich eine Videokamera aufweist.

In besonders vorteilhafter Weise kann die vorstehend beschriebene Bildelementverarbeitung sowie die Auffindung des Bautyps des sich an das Gate des Flughaftenterminals annähernden Flugzeugs bei einem Dockingsystem für Flughafenterminals zum Einsatz kommen, daß je Gate eine Dockingeinheit hat, die über ein Kommunikationsnetzwerk mit einer zentralen Steuereinrichtung in Verbindung steht, ein Flugfeldsituationsüberwachungs- und Verarbeitungssegment, zumindest ein Informations- und Leitanzeigesegment, ein Daten- und Statusweiterleitungssegment mit zumindest einer Videokamera je Mittellinie des Gate, und zumindest ein Gatebetriebssteuersegment aufweist, und der eine Eingabeeinheit zugeschaltet ist, mittels der Flugzeugmuster und das Gate betreffende Informationen in sie eingebbar sind.

Zweckmäßigerweise weist die Dockingeinheit je Mittellinie ihres Gate ein Informations- und Leitanzeigesegment auf.

Eine besonders vorteilhafte Ausgestaltung dieses Informations- und Leitanzeigesegments wird erzielt, wenn ein Mikroprozessor vorgesehen ist, der die Anzeigeelemtne steuert und Anzeigebefehle in Anzeigen der Anzeigeelemente umwandelt.

Eine apparativ und konstruktiv wenig aufwendige Ausgestaltung der erfindungsgemäßen Dockingeinheit bzw. des erfindungsgemäßen Dockingsystems wird erreicht, wenn das Daten- und Statusweiterleitungssegment der Dockingeinheit auf derselben Hardware läuft wie das Flugfeldsituationsüberwachungs- und - verarbeitungssegment und die Kommunikation zwischen der Dockingeinheit und der zenralen Steuereinrichtung über das Kommunikationsnetzwerk bewerkstelligt wird sowie die Vorgänge innerhalb der Dockingeinheit mittels des Daten- und Statusweiterleitungssegments koordiniert werden.

Bei einer Weiterbildung des erfindungsgemäßen Dockingsystems können das Daten- und Statusweiterleitungssegment und das Flugfeldsituationsüberwachungs- und -verarbeitungssegment der Dockingeinheit in einem Gehäuse angeordnet sein.

Zweckmäßigerweise können das Daten- und Statusweiterleitungssegmenc und das Flugfeldsituationsüberwachungs- und verarbeitungssegment auf einer Hardware-Basis aus einem PC-Motherboard und der Videosignalverarbeitungsausrüstung laufen.

Sofern bei der Konzeption der Dockingeinheit des erfindungsgemäßen Dockingsystems eine Anordnung des Daten- und Statusweiterleitungssegments sowie des Flugfeldsituationsüberwachungs- und -verarbeitungssegments außerhalb des eigentlichen Gate vorgesehen ist, ist es möglich, zusätzlich das Informations- und Leitanzeigesegment mit in dem für die beiden vorgenannten Komponenten gemeinsamen Gehäuse anzuordnen.

Bei einer weiteren speziellen Ausführungsform des erfindungsgemäßen Dockingsystems ist die Dockingeinheit so ausgebildet, daß mittels ihr Informations- und Leitanzeigen auf einen Bildschirm im Cockpit eines sich an das Gate annähernden Flugzeugs übertragbar sind. Diese Betriebsweise kann an die Stelle des Betriebs des Informations- und Leitanzeigesegments treten oder zusätzlich zum Betrieb dieses Informations- und Leitanzeigesegments vorgesehen sein.

Es ist auch möglich, das Flugfeldsituationsüberwachungs- und -verarbeitungssegment in einem Gehäuse mit der Videokamera anzuordnen.

Zur Übertragung von Daten zwischen dem Flugfeldsituationsüberwacnungs- und -verarbeitungssegment und dem Daten- und Statusweiterleitungssegment der Dockingeinheit ist es zweckmäßig, dem Flugfeldsituationsüberwachungs- und -verarbeitungssegment einen Digitalsignalprozessor zuzuordnen, in dem die ursprünglich analogen Videosignale in digitale Signale umgewandelt werden, bevor sie in die Eingabeleitung zum Daten- und Statusweiterleitungssegment eingegeben werden.

Die Eingabeeinheit, die der Dockingeinheit des erfindungsgemäßen Dockingsystems zugeordnet ist, hat vorzugsweise eine Flugzeugmusterausgabe, ein Gateeinrichtungsschema, eine Kalibriereinheit und eine Validations- und Diagnoseeinheit.

Vorteilhafterweise ist das Kommunikationsnetzwerk des erfindungsgemäßen Dockingsystems als Hochgeschwindigkeitsnetz mit asynchronem Übertragungsmodus ausgebildet, mittels dem ursprünglich digitale Signale und zu digitalen Signalen gewandelte, ursprünglich analoge Signale, z.B. Videosignale, übertragbar sind.

Das ATM-Hochgeschwindigkeitsnetz kann vorteilhafterweise zumindest einen als SICAN ATMax 155-PM2 ausgebildeten Netzwerkadapter aufweisen.

Systematisch ist die Dockingeinheit des erfindungsgemäßen Dockingsystems zweckmäßigerweise in ein Bodenüberwachungsund -verarbeitungssegment, ein Gatesteuersegment, ein Gateprogrammsegment und ein Gatedatenweiterleitungssegment gegliedert.

Vorteilhaft weist das Bodenüberwachungs- und Verarbeitungssegment eine Flugfeldüberwachung und einen Flugfeldsituationsprozessor auf, der mittels eines Interface an das Gateprogrammsegment angeschlossen ist.

Das Gatesteuersegment der Dockingeinheit des erfindungsgemäßen Dockingsystems hat eine Flugfeldbodenbeleuchtung, eine Informations- und Leitanzeige, eine Gatebetriebssteuerung, ein Luxometer und einen Gateprozessor, der auf einer PC-Plattform läuft, an die die Flugfeldbodenbeleuchtung, die Informations- und Leitanzeige, die Gatebetriebssteuerung und das Luxometer angeschlossen sind und der mittels eines Interface an das Gateprogrammsegment angeschlossen ist.

Das Gatedatenweiterleitungssegment sollte vorteilhaft eine Kalibrierhilfe und eine Festdatenweiterleitung aufweisen, die auf einer PC-Plattform laufen und mittels jeweils eines Interface an das Gateprogrammsegment angeschlossen sind.

Das Gateprogrammsegment der Dockingeinheit des erfindungsgemäßen Dockingsystems hat ein Gatemanagement und eine Überwachung.

Im folgenden wird die Erfindung an Hand von Ausführungsformen unter Bezugnahme auf die Zeichnung näher erläutert.

Es zeigen:

FIG 1     eine Prinzipdarstellung des erfindungsgemäßen Dockingsystems und seine Einbeziehung in ein Flughafennetzwerk;

FIG 2     eine Prinzipdarstellung eines sich an ein Gate eines Flughafenterminals annähernden Flugzeugs;

FIG 3     eine Prinzipdarstellung des Verfahrens bei der Auf findung eines Flugzeugumrisses eines sich an ein Gate annähernden Flugzeugs;

FIG 4     einen Ablauf beim Aufsuchen des Flugzeugumrisses des sich an das Gate annähernden Flugzeugs sowie die Einleitung des Tracking bzw. der Verfolgung des aufgefundenen Flugzeugs;

FIG 5     ein Datenflußdiagramm des erfindungsgemäßen Dockingsystems und seine Einbeziehung in das Kommunikationsnetzwerk eines Flughafens;

FIG 6     eine Prinzipdarstellung wesentlicher Komponenten des erfindungsgemäßen Dockingsystems;

FIG 7     eine erste Ausführungsform einer Dockingeinheit des erfindungsgemäßen Dockingsystems;

FIG 8     eine zweite Ausführungsform der Dockingeinheit des erfindungsgemäßen Dockingsystems;

FIG 9     eine dritte Ausführungsform der Dockingeinheit des erfindungsgemäßen Dockingsystems;

FIG 10     eine systematische Segmentstruktur des erfindungsgemäßen Dockingsystems;

FIG 11     ein Bodenüberwachungs- und -verarbeitungssegment GAMPS der in FIG 10 dargestellten Dokkingeinheit;

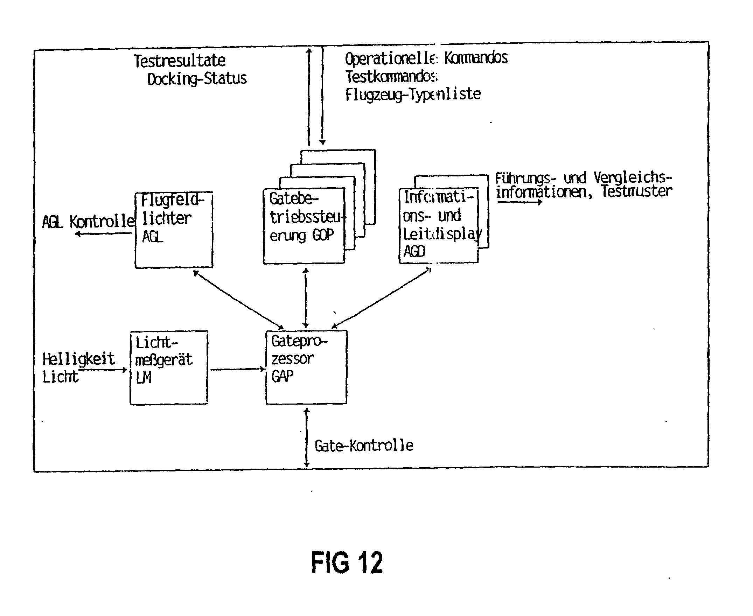

FIG 12     ein Gatesteuersegment GACS der in FIG 10 dargestellten Dockingeinheit;

FIG 13     ein Gatedatenweiterleitungssegment GDHS der in FIG 10 dargestellten Dockingeinheit; und

FIG 14     ein Gateprogrammsegment GSS der in FIG 10 dargestellten Dockingeinheit.

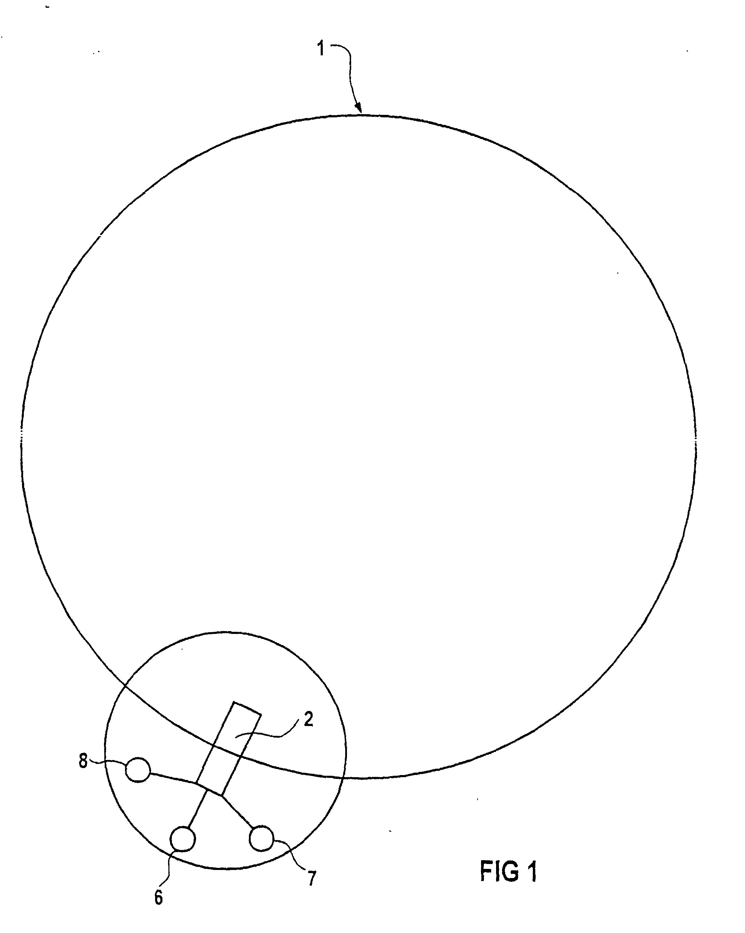

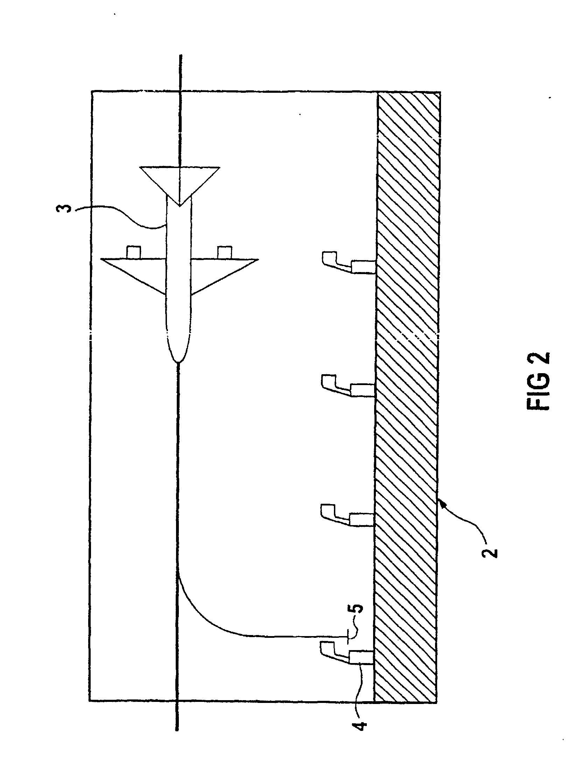

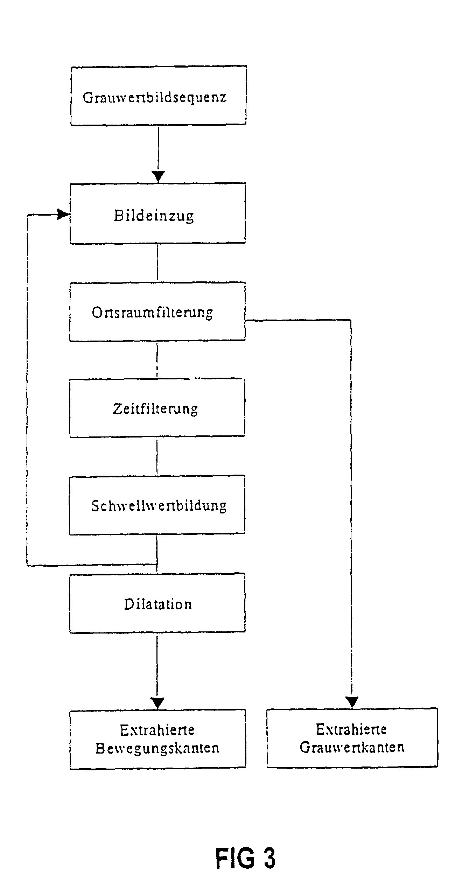

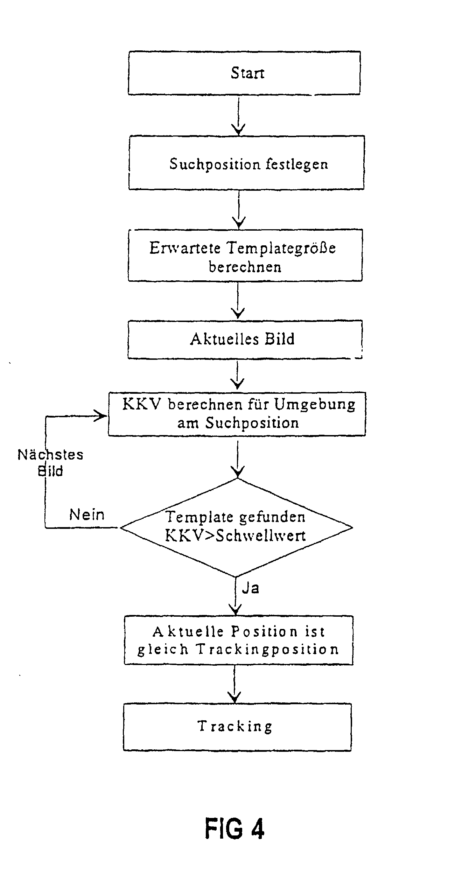

Ein wie in FIG 1 prinzipiell gezeigt in ein Flughafennetzwerk 1 einbezogenes Flughafenterminal 2 ist mit einem Dockingsystem ausgerüstet, mittels dem über eine Brücke eine Verbindung mit dem Innenraum eines Flugzeugs 3 herstellbar ist.

Um das Flugzeug 3 für den Andockvorgang am Flughafenterminal 2 korrekt zu positionieren, sind allen Gates 4 des Flughafenterminals 2 jeweils eine Positioniervorrichtung zugeordnet, mittels der das zur Andockung vorgesehene Flugzeug 3 in eine für seinen Bautyp vorgegebene Stop- bzw. Parkpositionn 5 leitbar ist.

Hierzu hat die Positioniervorrichtung eine als Graubildkamera ausgebildete Videoeinrichtung 6, mittels der das Flugzeug 3 bei seiner Annäherung an das Gate 4 des Flughafenterminals 2 erfaßbar ist, eine Auswerteeinheit 7, mittels der ihr von der Videoeinrichtung 6 zugeführte, die Gestalt und die Bewegung des Flugzeugs 3 betreffende Daten auswertbar sind, und ein Anzeigedisplay 8, mittels dem einem Piloten des Flugzeugs 3 Informationen vermittelbar sind, die zum Fahren des Flugzeugs 3 in die vorgegebene Parkposition 5 wesentlich sind.

Da die Parkposition 5 je nach Bautyp des sich nähernden Flugzeugs 3 unterschiedlich ist, muß seitens der Positioniervorrichtung zunächst ermittelt werden, um welchen Bautyp es sich bei dem sich annähernden Flugzeug 3 handelt. Hierfür werden durch die Videoeinrichcung 6 Grauwertbilder erstellt, auf denen das sich an das Gate 4 annähernde Flugzeug 3 abgebildet ist. Mittels der Videoeinrichtung 6 wird eine Sequenz von Grauwertbildern, auf denen das sich an das Gate 4 annähernde Flugzeug 3 in unterschiedlichen Positionen dargestellt ist, in die Auswerteeinheit eingelesen. Durch Auswertung dieser Sequenz von Grauwertbildern innerhalb der Auswerteeinheit können sich bewegende Kanten erfaßt werden, welche dem Umriß des sich an das Gate 4 annähernden Flugzeugs 3 entsprechen. Hierzu dient zunächst eine Raumfilterung, mittels der räumliche Kanten in den einzelnen Grauwertbildern aufgefunden werden. Mittels der Zeitfilterung werden zeitlich bewegte Kanten extrahiert, so daß bewegte von unbewegten Gegenständen unterschieden werden können. Hierdurch ist es erleichtert, aus den Grauwertbildern einen Flugzeugumriß zu ermitteln. Jeder Bautyp von Flugzeugen hat einen bestimmten Flugzeugumriß, der seinerseits markante Umrißabschnitte bzw. Templates aufweist, wobei sich bei Auswahl geeigneter Templates ein Template-Satz bilden läßt, der für die jeweiligen Bautypen von Flugzeugen exemplarisch ist. Dieser Template-Satz kann drei oder vorzugsweise fünf einzelne Templates enthalten.

Für jeden Bautyp von Flugzeugen ist innerhalb der Auswerteeinheit 7 ein Template-Satz abgespeichert. Die für das sich an das Gate 4 annähernde Flugzeug 3 ermittelte Flugzeugkontur bzw. der daraus sich ergebende Template-Satz wird nunmehr mit den innerhalb der Auswerteeinheit abgespeicherten Template-Sätzen verglichen, wobei als Ergebnis dieser Vergleichsoperation der Bautyp des sich dem Gate 4 des Flughafenterminals 2 annähernden Flugzeugs 3 ermittelt wird. Diesem Bautyp isc eine spezielle Parkposition 5 zugeordnet. Auf dem Anzeigedisplay 8 werden nunmehr Angaben abgebildet, die den Flugzeugführer bzw. Piloten in die Lage versetzen, sein Flugzeug 3 in diese Parkposition 5 zu stellen.

Im folgenden soll im einzelnen beschrieben werden, wie mittels Kantenoperatoren im Ortsraum die stationären Grauwertkanten aus den Grauwertbildern extrahiert werden, um die Flugzeugkontur zu erhalten.

Hierbei kann vorteilhaft ein Sobel-Operator eingesetzt werden, der sich nicht aus einer mathematisch geschlossenen Form herleitet. Dieser Sobel-Operator hat folgende Gestalten:

```
Form 1:  -1,  -2,  -1
          0,   0,   0
          1,   2,   1
```

```
Form 2:  -1,   0,1
         -2,   0,2
         -1,   0,1
```

Form 1 extrahiert waagerecht im Grauwertbild liegende Kanten, Form 2 extrahiert senkrecht im Grauwertbild liegende Kanten. Dies geschieht durch eine gewichtete erste Ableitung in der jeweils betrachteten Koordinatenrichtung. Es wurden beide Sobel-Operatoren auf das Grauwertbild angewendet, und deren Ergebnisse wechselweise pixelweise verknüpft:

$$b_{i,j} = \frac{\sqrt{b_{1,i,j}^2 + b_{2,i,j}^2}}{\sqrt{2}}.$$

Um bewegte Kanten zu extrahieren muß nicht nur ein Grauwertbild, sondern eine zeitliche Sequenz von Grauwertbildern betrachtet werden. Die Filterkerne müssen deshalb über eine zeitliche Dimension verfügen. Es wurden sowohl Filterkerne, die nur über eine zeitliche Dimension verfügen, als auch Filterkerne, die über eine zeitliche und über räumliche Dimensionen verfügen, untersucht.

Als Filterkerne haben sich ein Laplace-Filter, ein Mexican Hat- oder HildrethMarr-Operator und ein Sobel-Operator als besonders zweckmäßig erwiesen, wobei in letzterem Fall das Konzept eines zweidimensionalen Kantenfilters, das mit einer gewichteten ersten Ableitung arbeitet, auf drei Dimensionen erweitert wurde. Daraus ergibt sich folgender Operatorkern in drei Dimensionen der Größe 3 x 3 x 3:

```
-1,  -1,  -1
-1,  -8,  -1
-1,  -1,  -1
t = 0
```

```
 0,  0,  0
 0,  0,  0
 0,  0,  0
t = 1
```

```
 1,  1,  1
 1,  8,  1
 1,  1,  1
t = 2
```

Sowohl für die räumlichen als auch für die zeitlichen Kanten werden mit der Filterung mittels der Sobel-Filter die besten Resultate erzielt.

In FIG 3 ist der grundsätzliche Programmablauf bei der Ermittlung der Flugzeugkontur dargestellt.

Eine Grauwertbildsequenz, welche von der Videoeinrichtung 6 aufgenommen wurde, wird über einen Bildeinzug in die Auswerteeinheit 7 eingegeben. Dort wird diese Grauwertbildsequenz einer Ortsraumfilterung unterzogen, mittels der eine räumliche Kantenfilterung des jeweiligen Grauwertbildes durchgeführt wird. Das Ergebnis dieser räumlichen Kantenfilterung stellt den Betrag eines Sobel-Operators in x- und y-Richtung dar und wird abgespeichert. Mittels dieser räumlichen Kantenfilterung werden Grauwertkanten extrahiert und als Zwischenergebnis zur Verfügung gestellt.

In der der Ortsraumfilterung nachfolgenden Zeitfilterung wird eine zeitliche Kantenfilterung aufeinanderfolgender Grauwertbilder durchgeführt. Das Ergebnis dieser zeitlichen Kantenfilterung stellt den Betrag eines um die zeitliche Richtung erweiterten Sobel-Operators dar und wird abgespeichert. Als Ergebnis der zeitlichen Kantenfilterung liegt wiederum ein Zwischenergebnis vor.

In der auf die Zeitfilterung folgenden Schwellwercbildung wird aus dem Grauwertbild ein Binärbild erzeugt. Die Binarisierungsschwelle wird durch den variablen Schwellwert festgelegt. Bei Grauwerten unterhalb dieses Schwellwerts wird im ausgegebenen Binärbild ein Niedrigwert, bei gleichen oder den Schwellwert übersteigenden Werten ein Hochwert eingetragen. Durch die Schwellwertbildung wird ein weiteres Zwischenergebnis zur Verfügung gestellt.

Auf die Schwellwertbildung folgt die Funktionsstufe Dilatation, in der das im Zuge der Schwellwertbildung erzeugte Binärbild einer Dilatation mit einer Größe von einem Pixel unterzogen wird, d.h., alle Bereiche, die einen Grauwert größer Null aufweisen, werden an ihren Grenzen um einen Pixel vergrößert. Mittels der Funktionsstufe Dilatation wird ein Zwischenergebnis zur Verfügung gestellt, welches der Maske bzw. Umrißkontur des sich an das Flughafenterminal 2 bzw. dessen Gate 4 annähernden Flugzeugs 3 entspricht.

Mittels des in FIG 4 prinzipiell dargestellten Verfahrens erfolgt die Positionierung der Flugzeugkontur. Hierbei wird vorausgesetzt, daß das sich dem Gate 4 des Flughafenterminals 2 nähernde Flugzeug 3 spätestens bei einem vorgegebenen Mindestabstand zur Parkposition im Bereich des Gates 4 eingebogen ist und sich der Flugzeugführer bzw. Pilot hierbei ungefähr an der Zentrallinie dieses Gate 4 orientiert. Hierfür wird eine Fangposition auf dieser Zentrallinie definiert. Um diese Fangposition wird ein Suchbereich definiert, in dem die die Flugzeugkontur bzw. den Flugzeugtyp festlegenden Merkmale gesucht werden. Wie groß dieser Fangbereich zu definieren ist, hängt von der tolerierten lateralen Abweichung des sich dem Gate 4 nähernden Flugzeugs 3 ab.

Die den Template-Satz eines Flugzeugtyps bildenden einzelnen Template müssen so ausgewählt werden, daß sie nicht invariant gegenüber Verschiebungen sind und ferner einen hohen Kontrast in der Sequenz von Grauwertbildern aufweisen. Außerdem müssen die ausgewählten Merkmale bzw. Template eine hohe Toleranz gegenüber äußeren Einflüssen, wie z.B. Beleuchtung und Witterung, aufweisen. Daher wurden für die bisher in Form von Template-Sätzen aufgenommenen Flugzeugtypen folgende Merkmale bzw. einzelne Template ausgewählt:

Die beiden Triebwerke, das Windshield und die zwei Fahrwerke. Für jeden Flugzeugtyp wird mittels dieser einzelnen Templates ein individueller Template-Satz erstellt.

Um die im Vorfeld definierte Position wird das Flugzeug 3 nun gesucht. Da es sich beim Flugzeug 3 um einen starren Körper handelt, kann eine feste Anordnung der ausgesuchten Merkmale vorgegeben werden, die nur durch die Lage des Flugzeugs 3 zur Videoeinrichtung 6 verzerrt erscheinen können. Aus diesem Grund wird angestrebt, ein optimales bzw. elastisches Gitter zu finden. Um dieses Vorhaben zu erreichen, wird um jedes Template in einem definierten Suchbereich nach dem maximalen Kreuzkovarianzwert gesucht. Die Summe aller Kreuzkovarianzwerte ist ein Maß, ob der Flugzeugtyp aufgefunden wurde. Durch das Verwenden eines elastischen Gitters kann in dem später folgenden Vorgang "Positionsbestimmung" auch die Lage des Flugzeugs 3 bestimmt werden. Diese Lage-information kann wiederum für eine bessere Verfolgung verwendet werden.

Die Suche erfolgt im Raum-Sobel gefilterten Bild, welches die Grauwertkanten wiedergibt und daher für Beleuchtungseinflüsse wesentlich unempfindlicher ist als das zugrundeliegende Kantenbild. Im Vergleich zu anderen Operatoren weist das im Raum-Sobel gefilterte Bild den besten Kantenkontrast bei bester Rauschunterdrückung auf.

Die Position eines Template wird durch die Verschiebung des Template über dem Kantenbild bestimmt, bei der das Ähnlichkeitsmaß ein Maximum einnimmt. Als Ähnlichkeitsmaß wird hierfür die Kreuzkovarianz benutzt, da diese im Vergleich zur Kreuzkorrelation einen besseren Maximum/Umgebungs-Kontrast bildet und im Vergleich zur euklidischen Distanz ein besseres Maximum/Rausch-Verhältnis besitzt.

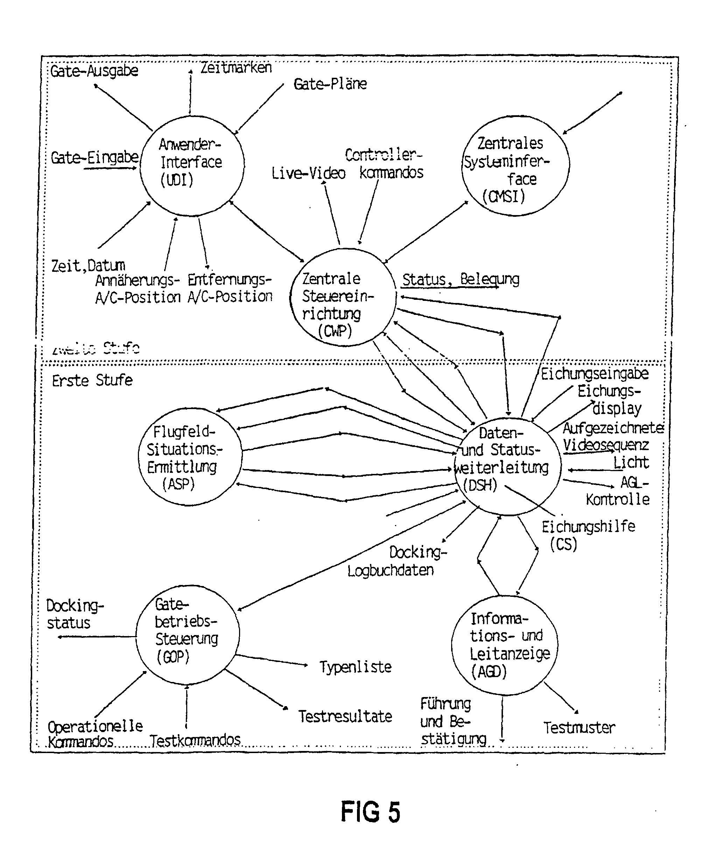

Aus dem in FIG 5 dargestellten Datenflußdiagramm geht hervor, wie einzelne Funktionskomponenten des erfindungsgemäßen Dockingsystems mit anderen Funktionskomponenten desselben sowie mit außerhalb des eigentlichen Dockingsystems vorliegenden weiteren Funktionskomponenten einer Flughafensteuerung kommunizieren. Da viele in den FIGUREN aufgeführten Begriffe sinnvoll lediglich englischsprachig ausdrückbar sind, wird auf eine Übersetzung einzelner in den im folgenden beschriebenen FIGUREN auftretender Begriffe verzichtet, wobei jedoch die wesentlichen Komponenten der Erfindung im folgenden Text deutschsprachig ausgedrückt und mit den englischsprachigen Ausdrücken bzw. Abkürzungen in Zusammenhang gebracht sind.

FIG 5 ist in eine erste Stufe (first phase) und eine zweite Stufe (second phase) unterteilt, wie sich aus den punktierten Randlinien der FIG 5 ergibt. Für das erfindungsgemäße Dockingsystem ist der die erste Stufe beschreibende untere Teil der FIG 5 wesentlich, da dort die wesentlichen Funktionselemente des Dockingsystems selbst dargestellt sind, wohingegen im oberen Teil von FIG 5 eine zentrale Steuereinrichtung (Central Working Position: CWP) eines Flughafens dargestellt ist, die an das erfindungsgemäße Dockingsystem angeschlossen ist und ihrerseits über ein zentrales Beobachtungs- und überwachungssysteminterface (Central Monitoring and Surveillance Systeminterface: CMSI) und ein Anwenderincerface (User Defined Interface: UDI) in die Steueranlage des Flughafens einbezogen ist.

Das erfindungsgmeäße Dockingsystem gliedert sich bei der Darstellung in FIG 5 in vier Funktionseinheiten. Zunächst ist dort eine Funktionseinheit aus Daten- und Statusweiterleitung (Docking Status/Data Handler: DSH) und Calibrierhilfe (Calibration Support: CS) vorgesehen. Diese Funktionseinheit erhält von der CWP zentrale Steuerungssignale (central control), Datenbasisaktualisierungen (database updates) sowie das jweilige Gate betreffende Beobachtungs- und Überwachungsdaten (gate i CMS data). Die CWP erhält von dieser Funktionseinheit DSH, CS Statusangaben bezüglich des jeweiligen Gates (gate i statuses), Livevideosignale von diesem Gate (gate i live video) und dieses Gate betreffende zentrale Beobachtungs- und Überwachungsdaten (gate i CMS data).

Die Funktionseinheit DSH, CS hat einen Kalibriereingang (calibration input) und einen Ausgang zu einer Kalibrierungsanzeige (calibration display). Außerdem gibt die Funktionseinheit DSH, CS aufgezeichnete Videosequenzen (recorded video sequences) sowie Steuersignale für die Flugfeldbodenbeleuchtung (Airfield Ground Lightning: AGL Control) aus. Die DSH arbeitet gemeinsam mit einer weiteren Funktionseinheit, nämlich dem Flugfeldsituationsprozessor (Airfield Situation Processing: ASP) auf einem PC-basierten System. Von der DSH der Funktionseinheit DSH, CS erhält die Funktionseinheit ASP Steuersignale für die ASP (ASP control), Initialisierungsdaten (initialization data) und B & W-Videodaten (B & W Video Data). Aus der Funktionseinheit ASP erhält die DSH der Funktionseinheit DSH, CS Trackingergebnisse (track results) sowie ASP-Testergebnisse (ASP check results).

Außerdem werden in die Funktionseinheit DSH, CS die Gateausgestaltung (gate configuration) betreffende Daten eingegeben, wohingegen die genannte Funktionseinheit den Andockungsvorgang betreffende Daten (docking log data) ausgibt.

Als weitere Funktionseinheit verfügt das erfindungsgemäße Dockingsystem über eine Gatebetriebssteuerung (Ground Operator Panel: GOP), aus der Übertragungsdaten (transfer data) in die Funktionseinheit DSH, CS eingegeben werden und die aus der Funktionseinheit DSH, CS Übertragungsdaten erhält. In das GOP werden darüber hinaus Betriebs- und Prüfbefehle (operation commands, test commands) eingegeben, während aus dem GOP der Dockingstatus (docking statuses), Testergebnisse (test results) und eine Flugzeugbauarttabelle (a/c type table) ausgegeben werden.

Als weitere Funktionseinheit des erfindungsgemäßen Dockingsystems ist eine Informations- und Leitanzeige (Advisor and Guidance Display: AGD) vorgesehen, welches Selbstüberprüfungsergebnisse (Self test results) in die Funktionseinheit DSH, CS eingibt und aus dieser Funktionseinheit Daten zur Erzeugung der Zeichen für die Anzeigeinformation (display information character generation data) erhält. Das AGD gibt Leit- und Verifizierungssignale (guidance and verification) und Prüfmuster (test patterns) aus.

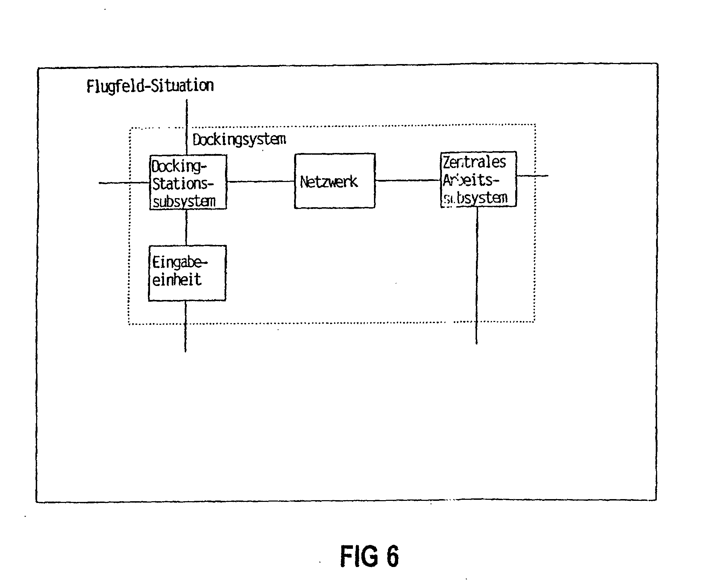

Das erfindungsgemäße Dockingsystem DGS hat, wie sich aus FIG 6 ergibt, im Prinzip drei Teilbetriebssysteme, nämlich eine Dockingeinheit (Docking Station Subsystem: DSS), eine zentrale Steuereinrichtung (Controler Working Position Subsystem: CWPS) und ein Kommunikationsnetzwerk (Communikation Network Subsystem: CNWS). Die DSS enthält alle diejenigen Systemsegmente, die an den Gates angeordnet sind. Die CWPS besteht aus einem auf einer Workstation basierendem Display- und Steuersystem, das in einem zentralen Kontrollraum des Flughafens vorgesehen ist. Das CNWS ist das Netzwerk, das diese beiden Untereinheiten miteinander verbindet, um Daten zwischen diesen Untereinheiten zu übermitteln.

Eine der DSS zugeordnece Eingabeeinheit (Auxiliary subsystem: AuxS) enthält einige Hilfsfunktionen, z.B. die Erstellung neuer Flugzeugmuster, die Gateausgestaltung und Wartung.

Die DSS steht in Verbindung mit der Flugfeldsituation (Airfield Situation) einerseits und andererseits mit Wartungspersonal (Maintainer), Kalibrierpersonal (Calibrator), Brückenpersonal (Bridge Personnel), Bodenpersonal (Ground Personnel), (Co-)Piloten und der AGL in Verbindung. Über die AuxS kann die Gateausgestaltung (Gate Snecifier), die Flugzeugmusterausgestaltung (A/C Model Specifier), Installationspersonal (Installation Personnel) und die Entwicklungsabteilung (Research) mit der DSS in Verbindung treten.

Die CWPS des erfindungsgemäßen Dockingsystems ist einerseits in Verbindung mit der Verwaltung (Administrator), der Wartung (Maintainer), der Überwachung (Supervisor) und der Aufsicht (Controller); andererseits besteht eine Verbindung zum zentralen Beobachtungs- und Überwachungssystem (Central Monitoring and Surveillance System), zur Flughafendatenzentrale (Airport Database), zu benutzerdefinierten Gatesystemen (User Defined Gate Systems), zur AGL, zu Zeitbezugssystemen (Time Reference Systems) und zu einem Oberflächenbewegungsleit- und Steuersystem (Surface Movement Guidance and Control System: SMGCS).

Die DSS bedient zwei oder mehr Zentral- bzw. Mittellinien des Gate. Zwei Mittel- bzw. Zentrallinien können durch eine DSS bedient werden, falls die beiden voneinander abhängig sind bzw. falls die eine nicht einsetzbar ist, während die andere besetzt ist.

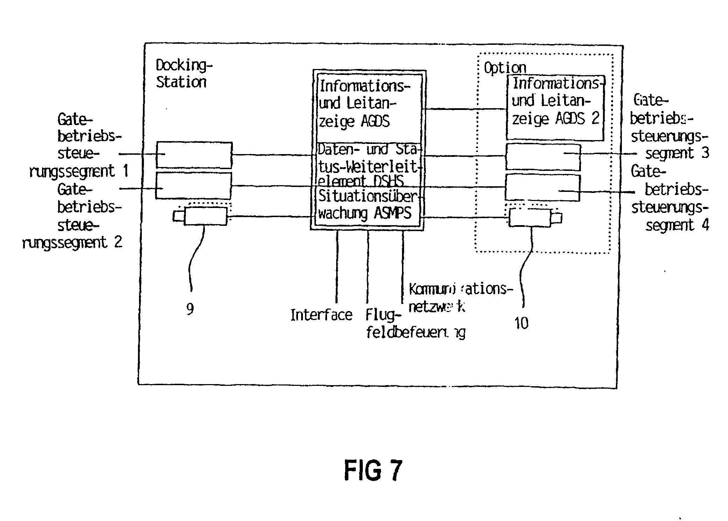

Wie sich aus den FIG 7, 8 und 9 ergibt, hat die DSS vier unterschiedliche Segmente:

Das Flugfeldsituationsüberwachungs- und verarbeitungs-segment (Airfield Situation Monitoring and Processing Segment: ASMPS);

das Informations- und Leitanzeigesegment (Advisor and Guidance Display Segment: AGDS); falls zwei voneinander abhängige Zentral- oder Mittellinien vorliegen, kann, je nach Konfiguration bzw. Anordnung der Zentral- oder Mittellinien am Gate, ein zweites AGDS erforderlich sein. Das AGDS beinhaltet einen integrierten Mikroprozessor, der die Anzeigeelemente steuert und Anzeigebefehle in Anzeigen umformt;

das Daten- und Statusweiterleitungssegment (Data and Status Handler Segment: DSHS) mit einer oder zwei Videokameras je Zentral- oder Mittellinie; die Anzahl der Videokameras je Zentral- bzw. Mittellinie hängt davon ab, welche Flugzeugtypen an dem jeweiligen Gate andocken dürfen; das DSHS läut auf derselben Hardware wie das ASMPS. Es bewerkstelligt die Kommunikation zwischen der DSS und der CWPS über das CNWS und koordiniert die Vorgänge innerhalb der DSS.

Das Gatebetriebssteuerungssegment (Gate Operator Panel Segment: GOPS) ist ein mikroprozessorbasiertes System mit einer kleinen Tastatur und einem Flüssigkristalldisplay LCD, das ausschließlich die Eingabedaten zum DSHS überträgt und die Daten vom DSHS am LCD ausgibt.

Drei unterschiedliche Ausführungsformen der Dockingeinheit DSS unterscheiden sich im wesentlichen durch die Anordnung des ASMPS und des DSHS.

Eine in FIG 7 dargestellte erste Ausführungsform sieht vor, daß das ASMPS und das DSHS im selben Gehäuse zusammen mit und an der gleichen Stelle wie das AGDS angeordnet sind, wie sich aus der die genannten Segmente umgebenden Doppellinie in FIG 7 ergibt.

Das ASMPS und das DSHS laufen auf einem PC-Motherboard und der Videobearbeitungsausrüstung, zu der beispielsweise ein sog. Frame Grabber gehört; es sind Schnittstellenelemente zu den GOPS 1 bis 4, zu den AGDS 1 und 2, zur Hilfsschnittstelle (Auxiliary Interface) und zum CNWS vorhanden, jedoch ohne mechanisch arbeitende Teile.

Das Auxiliary Interface ist beispielsweise zur Kalibrierung der Videokamera 9 bzw. der weiteren Videokamera 10 oder zur Überprüfung der DSS einsetzbar. Falls die DSS isoliert betrieben wird, kann das Auxiliary Interface zur Eingabe der Gateausgestaltung, der Flugzeugdatenbasis oder zur Ausgabe aufgezeichneter Videosequenzen verwendet werden. Das AGDS hat einen einfachen Mikroprozessor und drei oder gegebenenfalls vier LED-Arrays. Der einfache Mikroprozessor bewerkstelligt die Kommunikation mit dem DSHS und steuert die LED-Arrays.

Als Interface zwischen dem DSHS und den GOPS 1 bis 4 oder dem AGDS 2 können Schnittstellen des Typs RS 232, RS 422, RS 485 oder auf optischen Verbindungen basierende Schnittstellen eingesetzt werden. Als Interface zwischen dem DSHS und dem AGDS kann eine Schnittstelle vom Typ RS 232 eingesetzt werden.

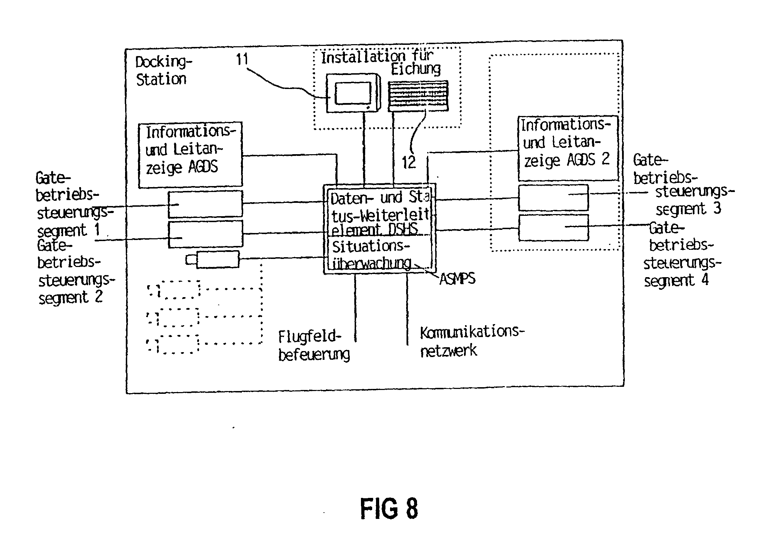

Die Dockingeinheit gemäß der in FIG 8 dargestellten zweiten Version bzw. Ausführungsform weist ein gemeinsames Gehäuse lediglich für das ASMPS und das DSHS auf, wie sich aus der die beiden Segmente umgebenden Doppellinie in FIG 8 ergibt. Diese beiden Segmente sind getrennt von der weiteren Ausrüstung in einem Ausrüstungsraum angeordnet. Das AGDS ist weiterhin natürlich im äußeren Gategebiet angeordnet. Hieraus ergibt sich, daß die Schnittstellen zwischen diesen Segmenten sich von denjenigen der ersten Ausführungsform unterscheiden. Die Schnittstelle zwischen dem AGDS und dem DSHS entspricht nun den anderen Schnittstellen vom Typ RS 232, RS 422 etc.

Anstelle des Auxiliary Interface sind nunmehr ein Videomonitor 11 und eine Tastatur 12 vorgesehen, die die Funktionen des bei der ersten Ausführungsform vorgesehenen Auxiliary Interface übernehmen können.

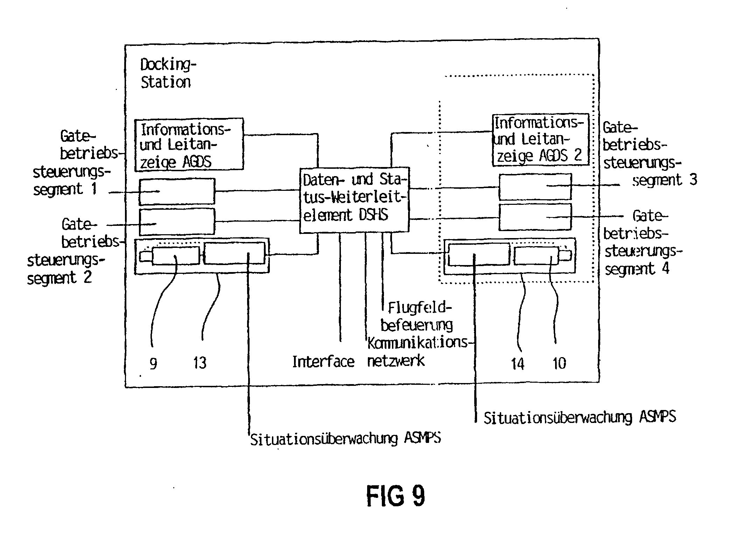

Bei der in FIG 9 dargestellten dritten Ausführungsform der DSS ist das ASMPS innerhalb eines Gehäuses 13 bzw. 14 der Videokamera 9 bzw. 10 aufgenommen. Die erforderliche Software läuft auf einem Digitalsignalprozessor, der die Flugzeugposition digital an das DSHS überträgt. Das DSHS kann als PC oder Mikroprozessor-Board mit relativ geringer Leistung verwirklicht sein. Grundsätzlich ist es auch möglich, das DSHS in einem Gehäuse mit dem AGDS oder dem AGDS 2 aufzunehmen.

Der wesentliche Unterschied zwischen den beschriebenen Ausführungsformen ist die Anordnung der das ASMPS und das DSHS bildenden Hardware. Geringere Unterschiede bestehen bei dem Auxiliary Interface und der Schnittstelle zwischen dem AGDS und dem DSHS.

Die erste Ausführungsform erfordert, daß die das ASMPS und das DSHS bildende Hardware unter äußeren Umgebungsbedingungen arbeiten kann.

Der Vorteil der ersten Ausführungsform besteht darin, daß lediglich ein minimaler Installationsaufwand erforderlich ist. Die Schnittstelle zwischen dem AGDS und dem DSHS ist einfacher gestaltet. Die Verläßlichkeit kann einerseits größer sein, da geringerer Installationsaufwand erforderlich ist und da keine mechanisch betriebenen Ausrüstungteile nötig sind, wobei andererseits jedoch der Becrieb unter äußeren Umgebungsbedingungen nötig ist; hierdurch wird die Verläßlichkeit reduziert, auch wenn Kühlungs- oder Heizmaßnahmen vorgesehen werden.

Die als Hilfssystem dienende Eingabeeinehit AuxS ist bei der Systeminstallierung und bei der Systemwartung zum Starten und zur Aufrechterhaltung des Systems erforderlich. Zu ihr gehört eine Flugzeugmusterausgabe (Aircraft Model Editor: AME), ein Gateeinrichtungsschema (Gate Installation Planer: GIP), eine Kalibriereinheit (Calibration Tool: CT), eine Validationsund Diagnoseeinheit (Validation and Diagnosis Tool: VDT) und eine Warzungshilfseinheit (Maintainer Support Tool).

Die AME kann an einem separaten PC installiert werden. Das Flugzeugmuster kann bei der zweiten Ausführungsform der DSS mittels einer Floppydisk in das Betriebssystem übertragen werden, und mittels eines Laptop-PC und des Auxiliary Interface bei der ersten und der dritten Ausführungsform. Falls sämtliche isolierten Systeme mittels eines Netzwerks verbunden sind, können diese Daten über die CWPS eingegeben werden.

Der GIP erstellt einen papiernen Installationsplan und die Gateausgestaltung auf einer Disk. Die Gateausgestaltung kann in gleicher Weise wie die Flugzeugmodelle in das Betriebssystem eingegeben werden.

Die VDT kann auf einem separaten PC laufen. Die Daten können diesem PC über das Auxiliary Interface eingegeben werden, falls ein isoliertes System vorliegt, oder die Eingabe ist über CNWS und CWPS möglich. Bei der zweiten Ausführungsform der DSS kann die VDT auch auf dem isolierten System laufen.

Die CT unterstützt den Kalibriervorgang mit einem grafischen Display. Der Kalibrierer kann die Kalibrierung interaktiv durchführen. Die errechneten Kalibrierdaten verbleiben in der DSS.

Das CNWS kann als ATM-Netzwerk verwirklicht sein, bei dem zumindest eine Schalteinheit realisiert werden kann. Zur Signalgebung sollte ein UNI 3.1 oder UNI 4.0 verwendet werden. Abhängig von den Bandweitenanforderungen können 155 Mbit/soder 25 Mbit/s-Adapter verwendet werden. Die erreichbaren Distanzen hängen vom Transportmedium ab: Monomodefaser für große Distanzen, Mehrmodenfaser für mittlere Distanzen oder verdrillte Doppelleicung für kurze Distanzen.

Die Vorteile eines solchen Hochgeschwindigkeits-ATM-Netzwerks liegen darin, daß große Distanzen möglich sind, keine elektromagnetischen Störungen auftreten, galvanische Isolierung vorliegt, eine garantierte Bandbreite zwischen zwei Datenendstellen und eine garantierte Verzögerung zwischen zwei Datenendstellen gewährleistet sind.

Das CWPS kann auf einem PC-System mit dem Windows NT-Betriebssystem laufen. Darüber hinaus werden als Hardware-Komponenten vorzugsweise ein Video-HW-ProVisionBusiness und ein ATM-Adapter ATMax 155-PM2 der SICAN GmbH eingesetzt.

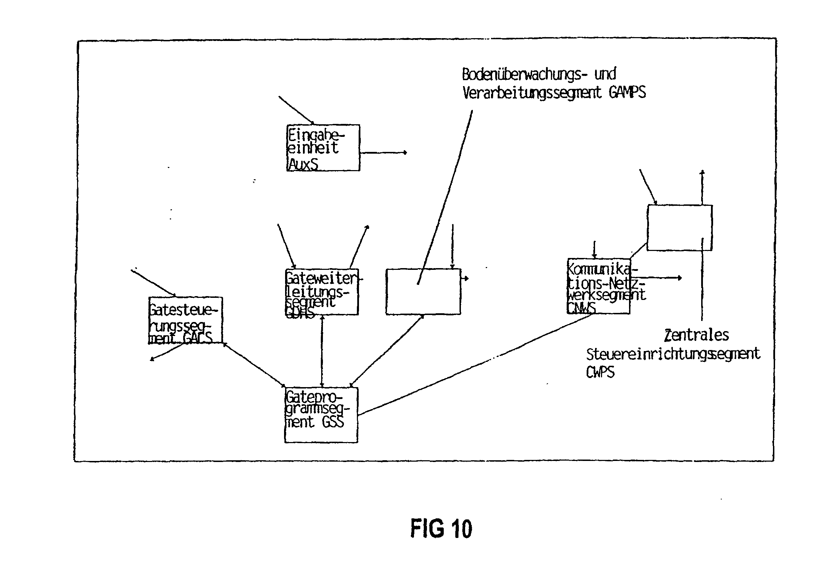

Bei der in FIG 10 gewählten Darstellung der DSS ist das in den FIG 7 bis 9 dargestellte Subsystemniveau ausgelassen; gemäß der Darstellung in FIG 10 hat die DSS folgende Segmente:

Ein Bodenüberwachungs- und -verarbeitungssegment (Ground Area Monitoring and Processing Segment: GAMPS);

ein Gatesteuerungssegment (Gate Area Control Segment: GACS);

ein Gateprogrammsegment (Gate Schedule Segment: GSS),

ein Gatedatenweiterleitungssegment (Gate Data Handler Segment: GDHS),

ein Kommunikationsnetzwerksegment (Communication Network Segment: CNWS) ;

ein zencrales Steuereinrichtungssegment (Central Working Position Segment: CWPS); und

ein Eingabeeinheitssegment (Auxiliary Functionalities Segment: AuxS).

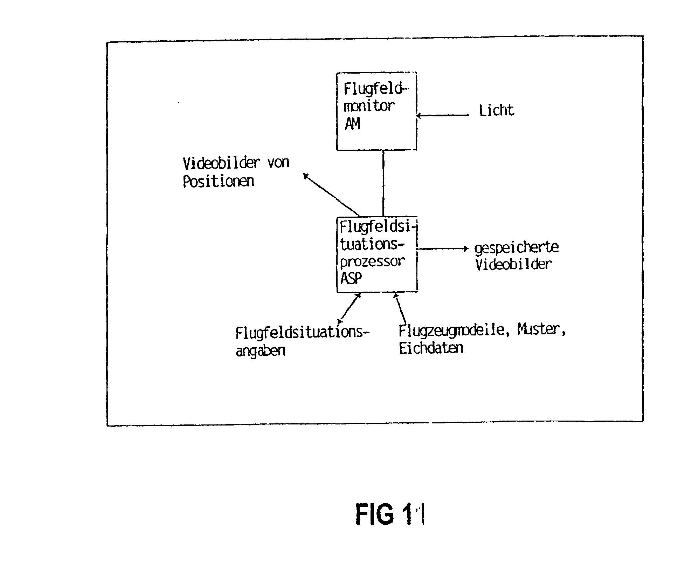

Das in FIG 11 dargestellte GAMPS hat eine Flugfeldüberwachung (Airfield Monitoring: AM) und einen Flugfeldsituationsprozessor (Airfield Situation Processor: ASP). Es unterstützt die folgenden Funktionen: Frame Grabbing, Berechnung der Anzeigeinformationen aus den Positionsdaten, die durch das ASMPS zur Verfügung gestellt werden, Verarbeitung der Flugfeldsituation, Berechnung der Realweltpositionen und Videoaufzeichnungen.

Das GAMPS hilft dem GSS bei der Untersuchung der Flugfeldsituation während der Dockingsequenz. Es stellt Selbstüberprüfungs- und Kalibrierungsinformationen sowie Videobilder für die Kalibrierung des GSS zur Verfügung. Außerdem versorgt das GAMPS das AuxS mit aufgezeichneten Videosequenzen.

Das GACS besteht aus der Flugfeldbodenbeleuchtung (Airfield Ground Lightning: AGL), dem Informations- und Leitanzeigedisplay (Advisor and Guidance Display AGD), der Gatebetriebssteuerung (Gate Operator Panel: GOP), dem Luxometer (LM) und dem Gateprozessor (Gate Area Processor: GAP), wobei der GAP auf einer PC-Plattform läuft, an die die AGL, das AGD, das GOP und das LM angeschlossen sind.

Das GACS unterstützt die folgenden Funktionalitäten:

Messung der Lichtintensität im Bereich des Gate, Schaltung der AGL,
Darstellung von Leit- und Verifikationsangaben für den Flugzeugpilot und Anzeige von Prüfmustern für das Bodenpersonal, wobei ein oder zwei AGD vorgesehen sind,
Eingabe von Betriebs- und Prüfkommandos durch das Bodenpersonal über ein bis vier GOP, Ausgabe von Prüfergebnissen und
Dockingstatus an das Bodenpersonal über die GOP, Selbstüberprüfung aller Teile dieses Segments und Kommunikation und Datenaustausch mit dem GSS.

Das GACS muß die Lichtintensität im Gatebereich messen und in eine dunkle oder helle Information umsetzen. Das GACS übersetzt die Eingaben des GOP und leitet sie an das GSS weiter. Andererseits erhält das GACS Befehle vom GSS, interpretiert diese und leitet die entsprechenden Anzeigeinformationen an das AGD und das GOP, schaltet die AGL ein oder aus und überprüft die Kommunikationslinien zum AGD und GOP.

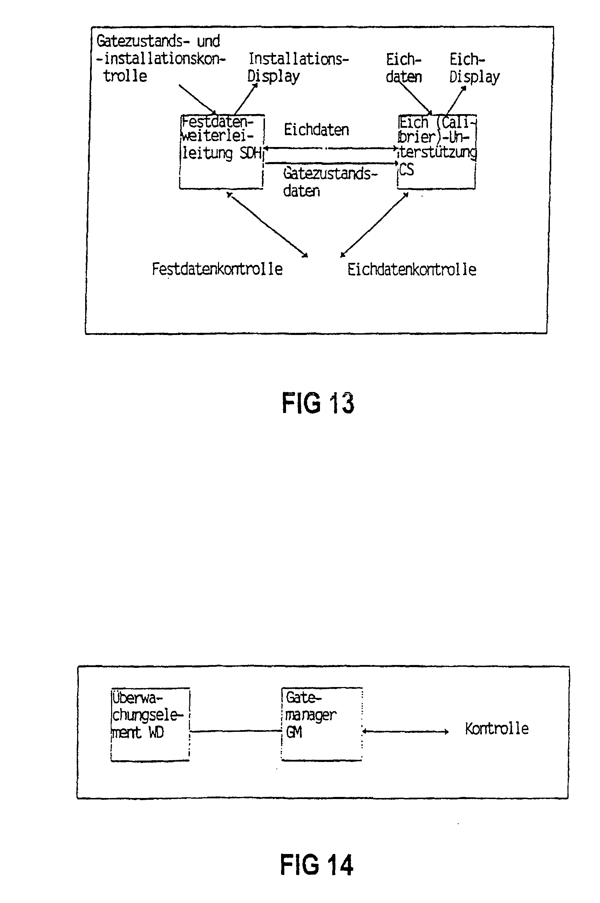

Das in FIG 13 dargestellte GDHS hat eine Kalibrierunterscützung (Calibration Support: CS) und eine Festdatenweiterleitung (Static Data Handler: SDH), die beide auf einer PC-Plattform laufen.

Die Hauptaufgaben des GDHS sind das Management des Kalibriervorgangs, das Management der Aktualisierungen der Gateausgestaltung und die Speicherung der Gateausgestaltung und der Flugzeugtypen.

Während der Einrichtungsphase im isolierten Betrieb liest es die Gateausbildungsdaten aus einer Datei, die vorher vom GIP erzeugt wurde. Im Netzwerkbetrieb liest es die Dacen über das GSS aus dem CNWS/CWPS und speichert diese intern.

Das in FIG 14 dargestellte GSS besteht aus dem Gatemanagement (Gate Manager: GM) und der Überwachung (Watchdog: WD).

Die Hauptaufgaben des GSS bestehen in der Steuerung des Aktionsablaufs innerhalb des Systems, der Versorgung des GAMPS mit Kalibrier- und Flugzeugdaten, der Erzeugung von Zeitstempeln und Zeitsperren, der Auslösung der Überwachung und dem Austausch von Daten mit umgebenden Segmenten.

Im isolierten Betrieb bewerkstelligt das GSS den Informationsein- und -ausgang von den GOP über das GACS. Im Netzwerkbetrieb wird zusätzlich das Interface zum CNWS/CWPS bedient. Das GSS überträgt komprimierte Livevideobilder und Statusinformationen zum CNWS/CWPS. Alternativ kann die Steuerung von Dockingsequenzen über das CWPS durchgeführt werden. In diesem Zusammenhang wird der Informationsein- und -ausgang von den GOP über das GACS über das CNWS mit dem CWPS ausgetauscht.

Bei der Einrichtungsphase gibt es die Systemsteuerung an das GDHS weiter. Im Netzwerkbetrieb versorgt das GSS das GDHS mit der Übertragung von Ausgestaltungsdaten über das CNWS/CWPS.

Beim Kalibriervorgang gibt das GSS die Systemsteuerung an das GDHS weiter. Es überträgt Videobilder vom GAMPS zu GDHS. Es setzt das GAMPS zur Verifizierung von Kalibrierdaten ein. Im Falle einer Aktualisierung der Gateausgestaltung wird der Andockmechanismus desaktiviert.

Nach Beendigung einer Dockingsequenz kann eine Wiederholung der Livevideosignale der letzten Dockingsequenz entweder durch den PC-Monitor, die Tastatur und die Maus im isolierten Betrieb oder über das Netzwerk am CWPS im Netzwerkbetrieb durchgeführt werden. Es ist nicht möglich, eine Dockingsequenz zu initiieren, während eine aufgezeichnete Videosequenz betrachtet wird.

Wartungstests können durch das GOPS vom Bodenpersonal oder durch das CNWS/CWPS gesteuert durch das GSS eingeleitet werden.

Das GSS löst die Überwachung periodisch aus; anderenfalls stellt die Überwachung den PC zurück.

Das CNWS sorgt für die Kommunikation zwischen dem CWPS und dem GSS an den unterschiedlichen Gates und umgekehrt. Es überträgt Befehle, Daten und komprimierte Videobilder; die letzteren werden nur auf spezielle Anforderung übertragen.

Die Hauptaufgaben des CWPS sind:

Anzeige der geplanten und tatsächlichen Gatebelegung, Anzeige des Status eines Andockvorgangs für das Personal der Zentrale, Eingabe von Gateausgestaltungen eines speziellen Gate, Eingabe neuer Flugzeugmuster, Datenaustausch mit umgebenden Systemen, z.B. Wartung, Flugplandaten, geplante Gatebelegungen.

Zu jeder Zeit kann die geplante und die tatsächliche Belegung von Gates grafisch dargestellt werden. Das globale Bild kann in mehrere kleinere Bereiche aufgeteilt werden. Eine Tafel aller besetzten Gates mit den zugehörigen Aufrufzeichen ist dargestellt. Das Zentralpersonal kann ein spezielles Gate manuell besetzen. Informationen eines speziellen Gate und eine Livevideoübertragung können gewählt werden. Die geplanten Daten sind in einem speziellen Blockdiagramm dargestellt. Die geplante Belegung kann bei Bedarf geändert bzw. modifiziert werden. Das CWPS sorgt dafür, daß eine Änderung Gaterestriktionen nicht verletzt, daß beispielsweise Flugzeugtypen nicht einem Gate zugeteilt werden, welches für derartige Flugzeugtypen nicht geeignet ist.

Das AuxS hat als Hauptfunktionalitäten die Unterstützung der Spezifikation eines Gate, d.h. die Koordinaten der Zentral- bzw. Mittellinie und der Halteposition, für das Gate zugelassene Flugzeugtypen, die Spezifikation neuer Flugzeugmuster und die Darstellung der Wiederholung aufgezeichneter Dockingsequenzen zur Auswertung.

Diese Funktionalitäten können an einer getrennten Arbeitsstelle durchgeführt werden. Die Datenübertragung von und zu diesen Funktionen wird mittels einer Disk oder eines anderen Mediums in Abhängigkeit von der erforderlichen Kapazität durchgeführt.

## Patentansprüche

1. Dockingsystem für Flughafenterminals, mit einer Positioniervorrichtung als Teil eines Gate-Betriebssystems eines Flughafenterminals (2), mittels der ein Flugzeug (3) in eine für seinen Bautyp vorgegebene Parkposition (5) leitbar ist und die eine Videoeinrichtung (6), mittels der das Flugzeug (3) bei seiner Annäherung an das Flughafenterminal (2) erfaßbar ist, und eine Auswerteeinheit (7) aufweist, mittels der ihr von der Videoeinrichtung (6) zugeführte, die Gestalt und die Bewegung des Flugzeugs (3) betreffende Daten auswertbar sind, wobei in der Auswerteeinheit (7) für unterschiedliche Bautypen jeweils ein Template-Satz abgespeichert ist, wobei der Template-Satz zumindest drei, vorzugsweise fünf, für alle Bautypen markante Templates bzw. Umrißabschnitte des betreffenden Bautyps enthält, und daß in der Auswerteeinheit (7) aus den eingegebenen Signalen der Videoeinrichtung (6) die zumindest drei, vorzugsweise fünf, markanten Umrißabschnitte bzw. Templates des sich dem Flughafenterminal (2) nähernden Flugzeugs (3) ermittelbar und mit den abgespeicherten Template-Sätzen vergleichbar sind, **dadurch gekennzeich-**

**net,daß** zur aktuellen Positionsbestimmung des sich dem Flughafenterminal (2) annähernden Flugzeugs (3) ermittelte Trajektorien der Templates bzw. markanter Umrißabschnitte zugrundegelegt werden, indem in der Auswerteeinheit (7) eine Sequenz von Grauwertbildern einlesbar ist, die einzelnen Grauwertbilder der Sequenz räumlich filterbar sind, um Grauwertkanten zu extrahieren, die Sequenz von Grauwertbildern zeitlich filterbar ist, um Bewegungsbilder zu erzeugen, und aus den Bewegungsbildern eine Maske erzeugbar ist, die Bereiche für eine nachfolgende Segmentierung festlegt.

2. Dockingsystem nach Anspruch 1, bei dem die Videoeinrichtung (6) als Graubildkamera ausgebildet ist.

3. Dockingsystem nach Anspruch 1 oder 2, bei dem die Objektivbrennweite der Videoeinrichtung (6) 16 oder 25 mm beträgt.

4. Dockingsystem nach einem der Ansprüche 1 bis 3, bei dem die Videoeinrichtung (6) etwa fluchtend mit der Mittellinie des Flughafengates (2), vorzugsweise in ca. 9 m Höhe, angeordnet ist.

5. Dockingsystem nach einem der vorangehenden Ansprüche, deren Auswerteeinheit (7) zur zeitlichen und räumlichen Filterung der Grauwertbilder einen Sobel-Filter aufweist.

6. Dockingsystem nach einem der vorangehenden Ansprüche, mit einer Dockingeinheit DSS pro Gate (4), die über ein Kommunikationsnetzwerk CNWS mit einer zentralen Steuereinrichtung CWPS in Verbindung steht, ein Flugfeldsituationsüberwachungsund -verarbeitungssegment ASMPS, zumindest ein Informationsund Leitanzeigesegment AGDS, ein Daten- und Statusweiterleitungssegment DSHS mit zumindest einer Videokamera (6; 9, 10) je Mittellinie des Gate, und zumindest ein Gatebetriebssteuersegment GOPS aufweist, und der eine Eingabeeinheit AuxS zugeschaltet ist, mittels der Flugzeugmuster und das Gate betreffende Informationen in die Dockingeinheit DSS eingebbar sind.

7. Dockingsystem nach Anspruch 6, bei dem die Dockingeinheit DSS je Mittellinie ihres Gate (4) ein Informations- und Leitanzeigesegment AGDS aufweist.

8. Dockingsystem nach Anspruch 6 oder 7, bei dem jedes Informations- und Leitanzeigesegment AGDS einen Mikroprozessor aufweist, der die Anzeigeelemente steuert und Anzeigebefehle in Anzeigen umwandelt.

9. Dockingsystem nach einem der Ansprüche 6 bis 8, bei dem das Daten- und Statusweiterleitungssegment DSHS der Dockingeinheit DSS auf derselben Hardware läuft wie das Flugfeldsituationsüberwachungs- und -verarbeitungssegment ASMPS, die Kommunikation zwischen der Dockingeinheit DSS und der zentralen Steuereinrichtung CWPS über das Kommunikationsnetzwerk CNWS bewerkstelligt sowie die Vorgänge innerhalb der Dockingeinheit DSS koordiniert.

10. Dockingsystem nach einem der Ansprüche 6 bis 9, bei dem das Daten- und Statusweiterleitungssegment DSHS und das Flugfeldsituationsüberwachungs- und -verarbeitungssegment ASMPS in einem Gehäuse angeordnet sind.

11. Dockingsystem nach Anspruch 10, bei dem das Daten- und Statusweiterleitungssegment DSHS und das Flugfeldsituationsüberwachungs- und -verarbeitungssegment ASMPS auf einer Hardware-Basis aus einem PC-Motherboard und der Videosignalverarbeitungsausrüstung laufen.

12. Dockingsystem nach Anspruch 10 oder 11, bei dem das Informations- und Leitanzeigesegment AGDS mit in dem Gehäuse angeordnet ist.

13. Dockingsystem nach einem der Ansprüche 6 bis 9, bei dem die Dockingeinheit DSS so ausgebildet ist, daß mittels ihr Informations- und Leitanzeigen auf einen Bildschirm im Cockpit eines sich an das Gate annähernden Flugzeugs übertragbar sind.

14. Dockingsystem nach einem der Ansprüche 6 bis 9 oder 13, bei dem das Flugfeldsituationsüberwachungs- und -verarbeitungssegment ASMPS in einem Gehäuse (13, 14) mit der Videokamera (9, 10) angeordnet ist.

15. Dockingsystem nach Anspruch 14, bei dem zur Übertragung von Daten zwischen dem Flugfeldsituationsüberwachungs- und verarbeitungssegment ASMPS und dem Daten- und Statusweiterleitungssegment DSHS ein Digitalsignalprozessor DSP vorgesehen ist.

16. Dockingsystem nach einem der Ansprüche 6 bis 15, bei dem die Eingabeeinheit AuxS eine Flugzeugmusterausgabe AME, ein Gateeinrichtungsschema GIP, eine Kalibriereinheit CS und eine Validations- und Diagnoseeinheit VDT aufweist.

17. Dockingsystem nach einem der Ansprüche 6 bis 16, bei dem das Kommunikationsnetzwerk CNWS als Hochgeschwindigkeitsnetz mit asynchronem Übertragungsmodus ATM ausgebildet ist, mittels dem ursprünglich digitale Signale und zu digitalen Signalen gewandelte ursprünglich analoge Signale, z.B. Videosignale, übertragbar sind.

18. Dockingsystem nach einem der Ansprüche 6 bis 16, bei dem die Dockingeinheit DSS systematisch in ein Bodenüberwachungsund -verarbeitungssegment GAMPS, ein Gatesteuersegment GACS, ein Gateprogrammsegment GSS und ein Gatedatenweiterleitungssegment GDHS gegliedert ist.

19. Dockingsystem nach Anspruch 18, bei dem das Bodenüberwachungs- und -verarbeitungssegment GAMPS eine Flugfeldüberwachung AM und einen Flugfeldsituationsprozessor ASP aufweist, der mittels eines Interface an das Gateprogrammsegment GSS angeschlossen ist.

20. Dockingsystem nach Anspruch 18 oder 19, bei dem das Gatesteuersegment GACS eine Flugfeldbodenbeleuchtung AGL, eine Informations- und Leitanzeige AGD, eine Gatebetriebssteuerung GOP, ein Luxometer LM und einen Gateprozessor GAP aufweist, der auf einer PC-Plattform läuft, an die die Flugfeldbodenbeleuchtung AGL, die Informations- und Leitanzeige AGD, die Gatebetriebssteuerung GOP und das Luxometer LM angeschlossen sind und der mittels eines Interface an das Gateprogrammsegment GSS angeschlossen ist.

21. Dockingsystem nach einem der Ansprüche 18 bis 20, bei dem das Gatedatenweiterleitungssegment GDHS eine Kalibrierhilfe CS und eine Festdatenweiterleitung SDH aufweist, die auf einer PC-Plattform laufen und mittels jeweils eines Interface an das Gateprogrammsegment GSS angeschlossen sind.

22. Dockingsystem nach einem der Ansprüche 18 bis 21, bei dem das Gateprogrammsegment GSS ein Gatemanagement GM und eine Überwachung WD aufweist.

**Claims**

1. Docking system for airport terminals, having a positioning apparatus as part of a gate operating system of an airport terminal (2), by means of which an aircraft (3) can be guided to a .parking position (5) appropriate for its type, and which has a video device (6) by means of which the aircraft (3) can be detected as it approaches the airport terminal (2) and has an evaluation unit (7) by means of which it is possible to evaluate data which are supplied to it by the video device (6) and relate to the form and the movement of the aircraft (3), in which a template set for each different type is stored in the evaluation unit (7), in which the template set contains at least three, preferably five, specific templates for all types or outline sections of the relevant type, and in which the at least three, preferably five, specific outline sections or templates of the aircraft (3) which is approaching the airport terminal (2) can be determined, and can be compared with the stored template sets, in the evaluation unit (7), from the input signals from the video device (6) **characterized in that** the current position of an aircraft (3) which is approaching the airport terminal (2) is established on the basis of determined trajectories of the templates and/or specific outline sections, **in that** a sequence of grey-shade images can be read in the evaluation unit (7), the individual grey-shade images in the sequence can be filtered three-dimensionally in order to extract the grey-shade edges, the sequence of grey-shade images can be filtered in the time domain in order to produce moving images, and a mask which defines areas for subsequent segmentation can be produced from the moving images.

2. Docking system according to Claim 1, in which the video device (6) is in the form of a monochrome camera.

3. Docking system according to Claim 1 or 2, in which the objective focal lengths of the video device (6) are 16 or 25 mm.

4. Docking system according to one of Claims 1 to 3, in which the video device (6) is arranged approximately aligned with the centre line of the airport gate (2), preferably at a height of approximately 9 m.

5. Docking system according to one of the preceding claims, whose evaluation unit (7) has a Sobel filter for spatial filtering of the grey-shade images, and for filtering the grey-shade images in the time domain.

6. Docking system according to one of the preceding claims, having one docking station subsystem DSS per gate (4), which is connected via a communication network CNWS to a central working position CWPS, has an airfield situation monitoring and processing segment ASMPS, at least one advisor and guidance display segment AGDS, a data and status handler segment DSHS having at least one video camera (6; 9, 10) for each centre line of the gate, and at least one ground operation panel segment GOPS, and to which an auxiliary subsystem AuxS is connected, by means of which information relating to aircraft models and the gate can be entered in the docking station subsystem DSS.

7. Docking system according to Claim 6, in which the docking station subsystem DSS has an advisor and guidance display segment AGDS for each centre line of its gate (4).

8. Docking system according to Claim 6 or 7, in which each advisor and guidance display segment AGDS has a microprocessor which controls the display elements and converts display commands into displays.

9. Docking system according to one of Claims 6 to 8, in which the data and status handler segment DSHS of the docking station subsystem DSS runs on the same hardware as the airfield situation monitoring and processing segment ASMPS, which provides communication between the docking station subsystem DSS and the central working position CWPS via the communication network CNWS, and coordinates the processes within the docking station subsystem DSS.

10. Docking system according to one of Claims 6 to 9, in which the data and status handler segment DSHS and the airfield situation monitoring and processing segment ASMPS are arranged in one housing.

11. Docking system according to Claim 10, in which the data and status handler segment DSHS and the airfield situation monitoring and processing segment ASMPS run on a hardware basis comprising a PC motherboard and the video signal processing equipment.

12. Docking system according to Claim 10 or 11, in which the advisor and guidance display segment AGDS is also arranged in the housing.

13. Docking system according to one of Claims 6 to 9, in which the docking station subsystem DSS is designed such that it allows advisor and guidance displays to be transmitted to a screen in the cockpit of an aircraft which is approaching the gate.

14. Docking system according to one of Claims 6 to 9 or 13, in which the airfield situation monitoring and processing segment ASMPS is arranged in a housing (13, 14) with the video camera (9, 10).

15. Docking system according to Claim 14, in which a digital signal processor DSP is provided for transmission of data between the airfield situation monitoring and processing segment ASMPS and the data and status handler segment DSHS.

16. Docking system according to one of Claims 6 to 15, in which the auxiliary subsystem AuxS has an aircraft model editor AME, a gate installation planner GIP, a calibration unit CS and a validation and diagnosis tool VDT.

17. Docking system according to one of Claims 6 to 16, in which the communication network CNWS is in the form of a high-speed network using the asynchronous transmission mode ATM, by means of which originally digital signals and originally analogue signals converted into digital signals, for example video signals, can be transmitted.

18. Docking system according to one of Claims 6 to 16, in which the docking station subsystem DSS is systematically broken down into a ground area monitoring and processing segment GAMPS, a gate area control segment GACS, a gate schedule segment GSS and a gate data handler segment GDHS.

19. Docking system according to Claim 18, in which the ground area monitoring and processing segment GAMPS has an airfield monitor AM and an airfield situation processor ASP, which is connected by means of an interface to the gate schedule segment GSS.

20. Docking system according to Claim 18 or 19, in which the gate area control segment GACS has airfield ground lighting AGL, an advisor and guidance display AGD, a ground operation panel GOP, a luxometer LM and a gate processor GAP which runs on a PC platform to which the airfield ground lighting AGL, the advisor and guidance display AGD, the ground operation panel GOP and the luxometer LM are connected, and which is connected by means of an interface to the gate schedule segment GSS.

21. Docking system according to one of Claims 18 to 20, in which the gate data handler segment GDHS has a calibration support CS and static data handler SDH, which run on a PC platform and are connected by means of in each case one interface to the gate schedule segment GSS.

22. Docking system according to one of Claims 18 to 21, in which the gate schedule segment GSS has gate management GM and a watchdog WD.

**Revendications**

1. Système d'accostage pour des terminaux d'aéroport, comprenant un dispositif de positionnement, en tant que partie d'un système d'exploitation des portes d'un terminal d'aéroport (2), au moyen duquel un avion (3) peut être conduit jusqu'à une position de stationnement (5) prévue pour son type de construction et qui présente une installation vidéo (6) au moyen de laquelle l'avion (3) peut être enregistré lorsqu'il approche du terminal d'aéroport (2) et une unité d'interprétation (7) au moyen de laquelle les données qui concernent la configuration et le mouvement de l'avion (3) et qui lui sont transmises par l'installation vidéo (6) peuvent être interprétées, un ensemble de gabarits étant à chaque fois enregistré dans l'unité d'interprétation (7) pour différents types de construction ; l'ensemble de gabarits contient alors au moins trois, de préférence cinq, éléments de profil ou gabarits du type de construction concerné caractérisant tous les types de construction et on peut déterminer dans l'unité d'interprétation (7) les sections de profil ou gabarits caractéristiques - au nombre de trois au moins, de préférence cinq - de l'avion (3) qui s'approche du terminal d'aéroport (2) à partir des signaux entrés de l'installation vidéo (6) et les comparer aux ensembles de gabarits enregistrés, **caractérisé en ce que**, pour déterminer la position courante de l'avion (3) qui s'approche du terminal d'aéroport (2), on se fonde sur des trajectoires établies des gabarits ou des éléments de profil caractéristiques ; dans l'unité d'interprétation (7) on peut alors lire une séquence d'images à valeurs de gris, chaque image à valeurs de gris de la séquence pouvant être filtrée spatialement afin d'extraire les bords des valeurs de gris ; la séquence d'images de valeurs de gris peut alors être filtrée dans le temps afin de produire des images de mouvement et un masque qui établit des zones pour une segmentation ultérieure peut être produit à partir des images de mouvement.

2. Système d'accostage selon la revendication 1 pour lequel l'installation vidéo (6) est formée en tant que caméra à images en gris.

3. Système d'accostage selon la revendication 1 ou 2 pour lequel la focale de l'objectif de l'installation vidéo (6) est 16 ou 25 mm.

4. Système d'accostage selon l'une des revendications 1 à 3 pour lequel l'installation vidéo (6) est placée approximativement en alignement avec la ligne médiane de la porte d'aéroport (2), de préférence à une hauteur de 9 m.

5. Système d'accostage selon l'une des revendications précédentes dont l'unité d'interprétation (7) destinée à filtrer dans le temps et dans l'espace les images à valeurs de gris présente un filtre de Sobel.

6. Système d'accostage selon l'une des revendications précédentes avec pour chaque porte (4) une unité d'accostage DSS qui est en liaison avec une installation de commande centrale CWSP au moyen d'un réseau de communication CNWS, qui présente un segment de surveillance et de traitement de la situation de l'aérodrome ASMPS, au moins un segment d'affichage d'information et de guidage AGDS, un segment de gestion de données et d'état DSHS ayant au moins une caméra vidéo (6 ; 9, 10) pour chaque ligne médiane de la porte et avec au moins un segment de commande de fonctionnement de porte GOPS et à laquelle une unité d'entrée AuxS est connectée, au moyen de laquelle des modèles d'avion et des informations concernant la porte peuvent être entrés dans l'unité d'accostage DSS.

7. Système d'accostage selon la revendication 6 pour lequel l'unité d'accostage DSS présente pour chaque ligne médiane de sa porte (4) un segment d'affichage de l'information et du guidage AGDS.

8. Système d'accostage selon la revendication 6 ou 7 pour lequel chaque segment d'affichage d'information et du guidage AGDS présente un microprocesseur qui commande les éléments d'affichage et qui convertit les instructions d'affichage en affichages.

9. Système d'accostage selon l'une des revendications 6 à 8 pour lequel le segment de transmission de données et d'état DSHS de l'unité d'accostage DSS tourne sur le même matériel informatique que le segment de surveillance et de traitement de la situation de l'aérodrome ASMPS, pour lequel la communication entre l'unité d'accostage DSS et l'unité de commande centrale CWPS est réalisée par l'intermédiaire du réseau de communication CNWS et pour lequel les processus à l'intérieur de l'unité d'accostage sont coordonnés.

10. Système d'accostage selon l'une des revendications 6 à 9 pour lequel le segment de gestion de données et d'état DSHS et le segment de surveillance et de traitement de la situation de l'aérodrome ASMPS sont placés dans un boîtier.

11. Système d'accostage selon la revendication 10 pour lequel le segment de gestion de données et d'état DSHS et le segment de surveillance et de traitement de la situation de l'aérodrome ASMPS tournent sur un matériel informatique constitué d'une carte mère d'ordinateur individuel et de l'équipement de traitement des signaux vidéo.

12. Système d'accostage selon la revendication 10 ou 11 pour lequel le segment d'affichage de l'information et du guidage AGDS est aussi placé dans un boîtier.

13. Système d'accostage selon l'une des revendications 6 à 9 pour lequel l'unité d'accostage DSS est formée de telle manière qu'on peut transmettre grâce à elle des affichages de l'information et du guidage sur un écran dans la cabine d'un avion qui s'approche de la porte.

14. Système d'accostage selon l'une des revendications 6 à 9 ou 13 pour lequel le segment de surveillance et de traitement de la situation de l'aérodrome ASMPS est placé dans un boîtier (13, 14) avec la caméra vidéo (9, 10).

15. Système d'accostage selon la revendication 14 pour lequel on prévoit un processeur de signaux numériques DSP pour transférer des données entre le segment de surveillance et de traitement de la situation de l'aérodrome ASMPS et le segment de gestion de données et d'états DSHS.

16. Système d'accostage selon l'une des revendications 6 à 15 pour lequel l'unité d'entrée AuxS présente une édition de modèles d'avion AME, un schéma d'installation de porte GIP, une unité d'étalonnage CS et une unité de validation et de diagnostic VDT.

17. Système d'accostage selon l'une des revendications 6 à 16 pour lequel le réseau de communication CNWS est formé en tant que réseau à vitesse élevée avec un mode de transfert asynchrone ATM au moyen duquel peuvent être transmis des signaux originellement numériques et des signaux originellement analogiques, par exemple des signaux vidéo, convertis en signaux numériques.

18. Système d'accostage selon l'une des revendications 6 à 16 pour lequel l'unité d'accostage DSS est systématiquement divisée en un segment de surveillance au sol et de traitement GAMPS, en un segment de commande de porte GACS, en un segment de programmation de porte GSS et un segment de transmission des données de porte GDHS.

19. Système d'accostage selon la revendication 18 pour lequel le segment de surveillance au sol et de traitement GAMPS présente une surveillance de l'aérodrome AM et un processeur de situation de l'aérodrome ASP qui est raccordé par une interface au segment de programmation de porte GSS.

20. Système d'accostage selon la revendication 18 ou 19 pour lequel le segment de commande de porte GACS présente un éclairage au sol de l'aérodrome AGL, un affichage de l'information et du guidage AGD, une commande de fonctionnement de porte GOP, un luxmètre LM et un processeur de porte GAP qui tourne sur une plate-forme d'ordinateur individuel à laquelle sont raccordés l'éclairage au sol de l'aérodrome AGL, l'affichage de l'information et du guidage AGD, la commande de fonctionnement de porte GOP et le luxmètre LM et qui est raccordé au segment de programmation de porte GSS par une interface.

21. Système d'accostage selon l'une des revendications 18 à 20 pour lequel le segment de gestion de données de porte GDHS présente un auxiliaire d'étalonnage CS et une transmission des données fixes SDH qui tournent sur une plate-forme d'ordinateur et qui sont raccordés au segment de fonctionnement de porte GSS par une interface à chaque fois.

22. Système d'accostage selon l'une des revendications 18 à 21 pour lequel le segment de programmation de porte GSS présente une gestion de portes GM et une surveillance WD.

FIG 1

FIG 2

EP 1 015 313 B1

```
┌─────────────────────────┐
│   Grauwertbildsequenz   │
└─────────────────────────┘
            │
            ▼
┌─────────────────────────┐
│       Bildeinzug        │◄──┐
└─────────────────────────┘   │
            │                 │
            ▼                 │
┌─────────────────────────┐   │
│    Ortsraumfilterung    │───┼──────────────┐
└─────────────────────────┘   │              │
            │                 │              │
            ▼                 │              │
┌─────────────────────────┐   │              │
│      Zeitfilterung      │   │              │
└─────────────────────────┘   │              │
            │                 │              │
            ▼                 │              │
┌─────────────────────────┐   │              │
│    Schwellwertbildung   │   │              │
└─────────────────────────┘   │              │
            │                 │              │
            ▼                 │              │
┌─────────────────────────┐   │              │
│       Dilatation        │───┘              │
└─────────────────────────┘                  │
            │                                 │
            ▼                                 ▼
┌─────────────────────┐         ┌─────────────────────┐
│     Extrahierte     │         │     Extrahierte     │
│  Bewegungskanten    │         │  Grauwertkanten     │
└─────────────────────┘         └─────────────────────┘
```

# FIG 3

18

```
┌─────────────────────────┐
│          Start          │
└─────────────────────────┘
              │
              ▼
┌─────────────────────────┐
│   Suchposition festlegen │
└─────────────────────────┘
              │
              ▼
┌─────────────────────────┐
│  Erwartete Templategröße │
│        berechnen         │
└─────────────────────────┘
              │
              ▼
┌─────────────────────────┐
│     Aktuelles Bild       │
└─────────────────────────┘
              │
              ▼
┌─────────────────────────┐
│ KKV berechnen für Umgebung│
│      am Suchposition     │
└─────────────────────────┘
              │
              ▼
           ◇ Template gefunden
  Nein     KKV>Schwellwert  ◇
Nächstes
  Bild
              │ Ja
              ▼
┌─────────────────────────┐
│    Aktuelle Position ist │
│  gleich Trackingposition │
└─────────────────────────┘
              │
              ▼
┌─────────────────────────┐
│        Tracking          │
└─────────────────────────┘
```

# FIG 4

**FIG 5**

Flugfeld-Situation

Dockingsystem

Docking-Stations-subsystem

Netzwerk

Zentrales Arbeits-subsystem

Eingabe-einheit

FIG 6

Docking-Station

Gate-betriebs-steue-rungssegment 1

Gate-betriebs-steue-rungssegment 2

9

Informations- und Leitanzeige AGDS

Daten- und Status-Weiterleit-element DSHS

Situationsüber-wachung ASMPS

Interface Flug-feldbefeuerung

Kommunikations-netzwerk Flugfeldbefeuerung

10

Option

Informations- und Leitanzeige AGDS 2

Gate-betriebs-steuerungs-segment 3

Gate-betriebs-steuerungs-segment 4

**FIG 7**

Docking-
Station

11

Installation für
Eichung

12

Informationsund Leitanzeige AGDS

Informationsund Leitanzeige AGDS 2

Gate-
betriebs-
steuerungs-
segment 1

Gate-
betriebs-
steuerungs-
segment 2

Daten- und Sta-
tus-Weiterleit
element DSHS
Situationsüberwachung

Gate-
betriebs-
steuerungs-
segment 3

Gate-
betriebs-
steuerungs-
segment 4

ASMPS

Flugfeldbefeuerung

Kommunikationsnetzwerk

FIG 8

Docking-
Station

Gate-
betriebs-
steuerungs-
segment 1

Gate-
betriebs-
steuerungs-
segment 2

Informationsund Leitanzeige AGDS

Daten- und Sta-
tus-Weiterleitelement DSHS

Informationsund Leitanzeige AGDS 2

Gate-
betriebs-
steuerungs-
segment 3

Gate-
betriebs-
steuerungs-
segment 4

Flugfeldbefeuerung

9        13

Interface

Kommunikationsnetzwerk

14     10

Situationsüberwachung ASMPS

Situationsüberwachung ASMPS

**FIG 9**

Bodenüberwachungs- und
Verarbeitungssegment GAMPS

Eingabeeinheit
AuxS

Gateweiterleitungssegment
GDHS

Gatesteuerungssegment GACS

Kommunika-
tions-Netzwerksegment
CNWS

Zentrales
Steuereinrichtungsegment
CWPS

Gateprogrammsegment GSS

FIG 10

EP 1 015 313 B1

25

Licht

Flugfeldmonitor
AM

Videobilder von
Positionen

Flugfeldsituationsprozessor
ASP

gespeicherte
Videobilder

Flugzeugmodelle, Muster,
Eichdaten

Flugfeldsituationsangaben

**FIG 1**

Testresultate
Docking-Status

Operationelle Kommandos
Testkommandos
Flugzeug-Typenliste

AGL Kontrolle

Flugfeldlichter
AGL

Gatebetriebssteuerung GOP

Informati-
ons- und
Leitdisplay
AGD

Führungs- und Vergleichsinformationen, Testmuster

Helligkeit
Licht

Lichtmeßgerät
LM

Gateprozessor
GAP

Gate-Kontrolle

**FIG 12**

EP 1 015 313 B1

Gatezustands- und
-installationskon-
trolle

Installations-
Display

Eichdaten

Eich-
Display

Festdatenweiterleileitung SDH

Eichdaten

Eich (Calibrier)-Un-
terstützung
CS

Gatezustandsdaten

Festdatenkontrolle

Eichdatenkontrolle

## FIG 13

Überwachungselement WD

Gate-
manager
GM

Kontrolle

## FIG 14